Europäisches Patentamt

European Patent Office

Office européen des brevets

(19)

(11) Veröffentlichungsnummer: **0 188 705**
**B1**

(12) **EUROPÄISCHE PATENTSCHRIFT**

(45) Veröffentlichungstag der Patentschrift: **26.09.90**

(51) Int. Cl.⁵: **B 23 H 11/00**

(21) Anmeldenummer: **85115200.9**

(22) Anmeldetag: **29.11.85**

(54) **Funkenerosionsmaschine mit feststehendem Maschinentisch und absenkbarem Arbeitsbehälter für das Dielektrikum.**

(30) Priorität: **21.12.84 DE 3446988**

(43) Veröffentlichungstag der Anmeldung:
**30.07.86 Patentblatt 86/31**

(45) Bekanntmachung des Hinweises auf die
Patenterteilung:
**26.09.90 Patentblatt 90/39**

(84) Benannte Vertragsstaaten:
**CH DE FR GB IT LI LU SE**

(56) Entgegenhaltungen:
**DE-A-3 134 833**
**DE-A-3 303 758**

(73) Patentinhaber: **AG für industrielle Elektronik
AGIE Losone bei Locarno
CH-6616 Losone/Locarno (CH)**

(72) Erfinder: **Lodetti, Attilio
Via La Pare 12
CH-6616 Losone (CH)**
Erfinder: **Blaser, Hansueli
Via Ai Chiossi 10
CH-6616 Losone (CH)**

(74) Vertreter: **EGLI-EUROPEAN PATENT
ATTORNEYS
Widenmayerstrasse 5
D-8000 München 22 (DE)**

Courier Press, Leamington Spa, England.

**Beschreibung**

Die Erfindung bezieht sich auf eine Funkenerosionsmaschine mit einem feststehenden Maschinentisch und einem darauf durch Zusammenfügen mindestens eines beweglichen Bauteils mit einem feststehenden Wandelement anordbaren Arbeitsbehälter für die dielektrische Arbeitsflüssigkeit. Zumindest ein Teil des Arbeitsbehälterbodens wird hierbei von der Maschinentischplatte gebildet. Die Rückwand des Arbeitsbehälters besteht im wesentlichen aus dem feststehenden Wandelement.

Eine derartige Funkenerosionsmaschine ist bereits Gegenstand der gleichzeitig mit gleichem Titel eingereichten europäischen Patentanmeldung (EP—A—0 186 793) der Anmelderin und stellt einem Stand der Technik nach Artikel 54(3) EPÜ dar.

Bei der Funkenerosionsmaschine gemäss der genannten älteren Anmeldung ist das die Arbeitsbehälterrückwand bildende feststehende Wandelement vom Maschinenständer räumlich getrennt und einstückig mit der Maschinentischplatte zu einem L-förmigen feststehenden Bauelement verbunden. Das bewegliche Bauteil besteht im wesentlichen aus einem im Querschnitt C-förmigen Rahmen, der das zur Bildung des Arbeitsbehälters komplementäre Bauteil zum feststehenden L-förmigen Bauteil darstellt. Dieser C-förmige Rahmen ist an Vertikalführungen, die am Maschinenständer angeordnet sind, vertikal verfahrbar, so dass dessen Oberkante unter die Maschinentischplatte abgesenkt werden kann. Eine derartige Funkenerosionsmaschine hat den Vorteil einer guten Zugänglichkeit zur Maschinentisch- bzw. Aufspannplatte nach dem Absenken der beweglichen Arbeitsbehälterwände, d.h. des C-förmigen Rahmens, bei hoher Stabilität der Funkenerosionsmaschine, was eine wesentliche Voraussetzung für eine hohe Arbeitsgenauigkeit ist. Der Maschinentisch kann nämlich unmittelbar mit dem Maschinenständer verbunden sein. Hierdurch ergibt sich die Möglichkeit einer grossflächigen Verbindung zwischen dem Maschinentisch und dem Maschinenständer sowie eines kurzen, in sich geschlossenen Kraftweges. Der in der älteren Anmeldung vorgesehene Abstand zwischen dem die Behälterrückwand bildenden feststehenden Wandelement und der Stirnfläche des Maschinenständers hat darüberhinaus den Vorteil einer weitgehenden termischen Isolierung des Maschinenständers vom Arbeitsbehälter. Hierdurch wird die Gefahr von Wärmespannungen im Maschinenständer erheblich reduziert, was wiederum zur Erhöhung der Arbeitsgenauigkeit beiträgt. Die einstückige Ausbildung des C-förmigen Rahmens und dessen absenkbare Anordnung verbunden mit der freien Zugänglichkeit der Maschinentischplatte führen zu einer Verkürzung der Arbeitszeit, die für das Auf- und Abrüsten der Maschinentischplatte (Werkstück positionieren, sowie auf- und abspannen unter Einhaltung grosser Genauigkeitsanforderungen, da davon wiederum die Fertigkeitsgenauigkeit abhängt) benötigt wird.

Ausgehend von diesem technischen Hintergrund bezweckt die Erfindung eine weitere Verkürzung der erforderlichen Arbeitszeit, um die Auslastung und damit die Produktivität der Maschine zu erhöhen. Gleichzeitig sollen die Vorteile der in der genannten älteren Anmeldung beschriebenen Funkenerosionsmaschine soweit wie möglich beibehalten werden.

Hierzu ist bei der eingangs genannten gattungsgemässen Funkenerosionsmaschine die Maschinentischplatte sowohl mit dem Maschinentisch als auch mit dem feststehenden Wandelement, hier jedoch unter Einschluss einer Dichtung, betriebsmässig lösbar verbunden.

Grundsaetzlich kann in vorliegender Erfindung das feststehende Wandelement auch ein Teil der Stirnwand des Maschinenständers selbst sein.

Die durch die erfindungsgemässe Lösung erreichte Auswechselbarkeit der Maschinentischplatte hat den Vorteil, dass das Auf- und Abrüsten der Maschinentischplatte bereits in der Zeit durchgeführt werden kann, in welcher die Funkenerosionsmaschine auf einer anderen Maschinentischplatte ein anderes Werkstück bearbeitet. Das zum Bearbeiten eines Werkstückes in der Funkenerosionsmaschine parallele Auf- und Abrüsten einer anderen Maschinentischplatte wird im folgenden "Parallelrüsten" genannt. Die Verwendung mehrerer auswechselbarer Mashinentischplatten für ein und dieselbe Funkenerosionsmaschine wird im folgenden "Palettisieren" genannt.

Nach einer bevorzugten Ausführungsform der Erfindung ist zwischen der Vorderwand des Maschinenständers und dem festehenden Wandelement, d.h. der Rückwand des Arbeitsbehälters ein Abstand vorgesehen. Hierdurch werden im wesentlichen die gleichen oben erwähnten Vorteile erzielt. Gemäss einer weiteren bevorzugten Ausführungsform ist die zwischen der Maschinentischplatte, auch Palette genannt, und dem festehenden Wandelement, d.h. der Behälterrückwand vorgesehene Dichtung als statische Dichtung, insbesondere als sog. Blähdichtung ausgestaltet. Bekanntlich kann eine Blähdichtung durch Aufblähen mittels eines Fluides, beispielsweise Luft oder Flüssigkeit, in den dichtenden Zustand überführt werden. Grundsätzlich kann die Blähdichtung in der auswechselbaren Maschinentischplatte und/oder im festehenden Wandelement angeordnet sein. Bevorzugt ist sie jedoch im feststehenden Wandelement angeordnet.

Besonders rasch ist die Maschinentischplatte dann auswechselbar, wenn sie auf ihrer Unterseite für einen Eingriff von im Maschinentisch angeordneten Schnellspann- und Zentriervorrichtungen ausgelegt ist. Vorzugsweise besteht hierbei die Zentriervorrichtung im wesentlichen aus zwei vertikal und versetzt auf dem Maschinentisch angeordneten Zentrierdornen zur Fixierung der Maschinentischplatte auf der Bestimmungsebene. Die Schnellspannvorrichtung weist einen im wesentlichen T-förmigen, vertikal geführten Hubkolben auf, dessen horizontaler Schenkel in eine hinterschnittene Nut eingreift, die an der Unterseite der Maschinentischplatte mittig angeordnet ist und von vorne nach hinten verläuft. Vorzugsweise genügt diese Anordnung den Anforderungen gemäss DIN 55 200. Hierdurch wird eine rasche Auswechselbarkeit der Maschinentischplatten gewährleistet bei glechzeitig hoher Zentriergenauigkeit. Darüberhinaus ist es dann auch grundsätzlich möglich, auf einer Palette bzw. einer Maschinentischplatte fixierte Werkstücke nacheinander von unterschiedlichen Maschinen bearbeiten zu lassen, beispielsweise von einer Funkenerosionsmaschine und danach oder davor von einer Fräsmaschine.

Bei der erfindungsgemässen Maschine kann die gelöste Maschinentischplatte von Hand oder mittels einer Hilfsvorrichtung nach vorne abezogen und mittels entsprechender weiterer Hilfseinrichtungen zu einer nicht näher erläuterten Aufrüststation zwecks Auf- und Abspannen des Werkstückes, sowie dessen exaktes Ausrichten und danach wieder zurück zur Funkenerosionsmaschine transportiert werden. Eine grosse Bedeutung kommt in diesem Zusammenhang einer automatisch arbeitenden heb-, senk- und drehbaren Tischplattenwechselvorrichtung (Roboter) zu, welche die Maschinentischplatten (Paletten) mittels zweier Tragholme aufzunehmen und zu transportieren vermag. Zu diesem Zweck weist die Stirnseite der Maschinentischplatte symmetrisch zu ihrer Mitte zwei Bohrungen zwecks Aufnahme zweier Tragholme einer automatisch arbeitenden heb-, senk- und drehbaren Tischplattenwechselvorrichtung (Roboter) auf. Der Roboter ist dann in der Lage, die Paletten direkt vom Maschinentisch ohne Einschaltung weiterer Hilfsmittel abzuheben, zur Auf- und Abrüststation zu transportieren und später wieder zur Funkenerosionsmaschine zurückzuführen.

Vorzugsweise ist die Maschinenntischplatte nach vorne und seitlich über den Maschinentisch auskragend ausgebildet. Damit wird jede Verschmutzungsgefahr durch herabtropfende Flüssigkeit, erodiertes Material und dgl. von der unterhalb der Maschinentischplatte mittig angeordneten Schnellspann- und Zentriervorrichtung ferngehalten. Damit entfällt die Notwendigkeit, die Schnellspann- und Zentriervorrichtung jeweils vor einem Palettenwechsel zu säubern, um die erforderliche Positionsgenauigkeit des Werkstückes sicherzustellen.

Im übrigen sind bei der erfindungsgemässen Funkenerosionsmaschine vorzugsweise die Flüssigkeitszu- und -abflussleitungen mit dem feststehenden Wandelement verbunden. Dies hat den Vorteil, dass bei einem Palettenwechsel die Zu- und Abflussleitungen nicht ebenfalls gelöst und wieder befestigt weden müssen.

Nachfolgend wird die Erfindung anhand von Ausführungsbeispielen unter Bezugnahme auf die beigefügte schematische Zeichnung noch näher erläutert. In der Zeichnung zeigen:

Fig. 1 ein erstes Ausführungsbeispiel in perspektivischer Darstellung, zum Teil in Funktionsgruppen zerlegt;

Fig. 2 ein Ausführungsbeispiel einer Maschinentischplatte im Schnitt und in der Ansicht mit Schnellspann- und Zentriervorrichtungen;

Fig. 3 einen Ausschnitt aus einem Ausführungsbeispiel einer Funkenerosionsmaschine mit auswechselbarer Maschinentischplatte (Palette) in Seitenansicht;

Fig. 4.1 und 4.2 einen Ausschnitt aus einem Ausführungsbeispiel einer Funkenerosionsmaschine in Vorderansicht mit Maschinentischplatte (Palette), abgesenktem Arbeitsbehälter und gelöster Schnellspannvorrichtung (Fig. 4.1) und das gleiche mit angehobenem Arbeitsbehälter, sowie der Schnellspannvorrichtung in Arbeitsstellung (Fig. 4.2);

Fig. 5 eine auf dem Maschinentisch aufgelagerte und gelöste Maschinentischplatte mit davor geschobener Hilfsvorrichtung im Moment des Verschiebens der Maschinentischplatte;

Fig. 6 ein Anheben und Abtransportieren der Maschinentischplatte; und

Fig. 7 eine automatisch arbeitende heb-, senk- und drehbare Maschinentischplatten-Wechselvorrichtung (Roboter) mit zwei an ihren Tragholmen eingehängten Maschinentischplatten (Paletten).

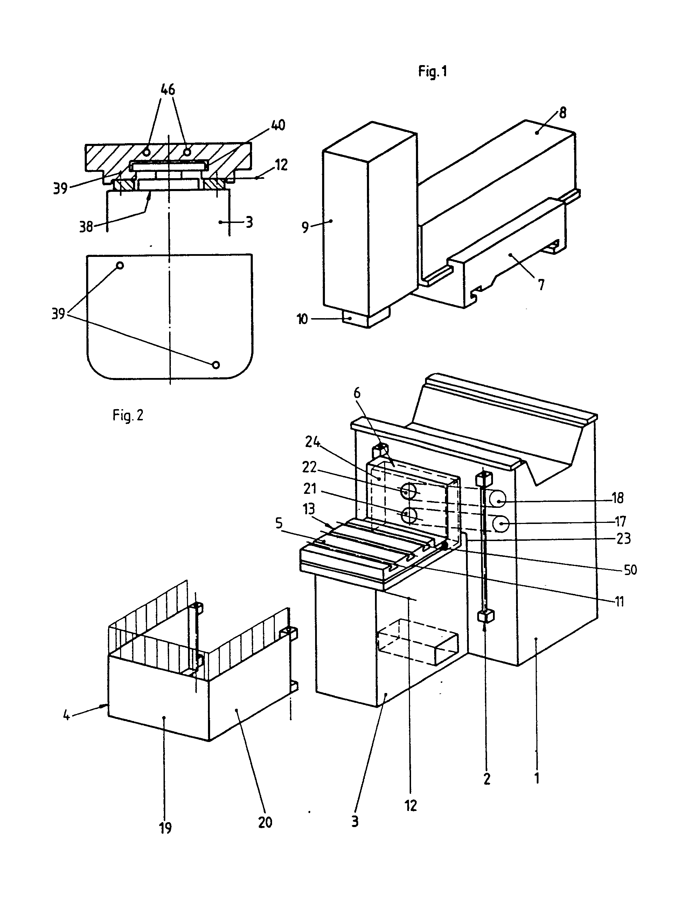

Das in Fig. 1 dargestellte Ausführungsbeispiel gleicht der Funkenerosionsmaschine gemäss der älteren Anmeldung EP—A—0 186 793 bis auf die Tatsache, dass bei ihr die Maschinentischplatte 5 ein bewegliches Bauteil ist und zu diesem Zweck betriebsmässig lösbar mit dem Maschinentisch 3 und dem die Arbeitsbehälterrückwand bildenden feststehenden Wandelement 6 verbunden ist, wobei zwischen dem feststehenden Wandelement 6 und der Maschinentischplatte 5 eine Blähdichtung 50 angeordnet ist.

Im übrigen weist die dargestellte Funkenerosionsmaschine einen Maschinenständer 1 mit einem Zwischenschlitten 7 und einem Querträger 8 auf, an dessen Stirnseite der Maschinenkopf 9 mit einer ein- und ausfahrbaren Pinhole 10 sitzt.

An der Vorderseite des Maschinenständers mit ein stabiler Maschinentisch 3 ausgebildet. Mittendurch den Maschinenständer 1 verlaufen zwei Rohrleitungen 17 und 18 für den Behälterablauf und die Rauchabsaugung. In der Bestimmungsebene 12 des Maschinentisches 3 und diesen nach vorne und seitlich überkragend sitzt die auswechselbare Maschinentischplatte 5, auch "Palette" genannt. Sie ist mit dem vertikal zu dieser und parallel zur Maschinenständerstirnseite im Abstand angeordneten feststehenden Wandelement 6 über die Blähdichtung 50 lösbar verbunden. Die Maschinentischplatte 5 und das die Arbeitsbehälterrückwand bildende feststehende Wandelement 6 bilden gemeinsam ein L-förmiges Bauelement 13.

An der Vorderwand des Maschinenständers 1 ist an zwei symmetrisch rechts und links zum Maschinentisch befestigten Vertikalführungen 2 ein bewegliches einstückiges Bauteil 4 befestigt. In hochgefahrenem Zustand bildet dieses durch Zusammenfügen mit dem L-förmigen Bauteil 13 unter Einschluss einer allseitig umlaufenden statisch arbeitenden, z.B. luftbetätigten weiteren Blähdichtung 11 den Arbeitsbehälter für die dielektrische Flüssigkeit. Das bewegliche Bauteil 4 hat einen im wesentlichen C-förmigen Querschnitt und besteht aus einer vertikalen Vorderwand 19 und zwei Seitenwänden 20.

Das feststehende Wandelement 6 des Bauteils 13 enthält in seinem oberen Teil eine Auslassöffnung 22 für die Rauchabsaugung und in seinem unteren Teil eine Auslassöffnung 21 für die dielektrische Flüssigkeit. Die beiden Auslassöffnungen 22 und 21 sind mit den zu ihnen bereits erwähnten korrespondierenden Rohrleitungen 18 und 17 im Maschinenständer 1 fest verbunden. Ausserdem ist das feststehende Wandelement 6 noch zusätzlich als Gehäuseblock 24 zur Aufnahme aller betriebsmässig erforderlichen Versorgungs- und Entsorgungseinrichtungen für den Arbeitsbehälter ausgebildet. Der mit der Bezugszahl 23 versehene Abstand zwischen der Stirnwand des Maschinenständers und dem feststehenden Wandelement 6 dient als Luftpolster zur Wärmeisolation zwischen Arbeitsbehwälter und Maschinenständer 1.

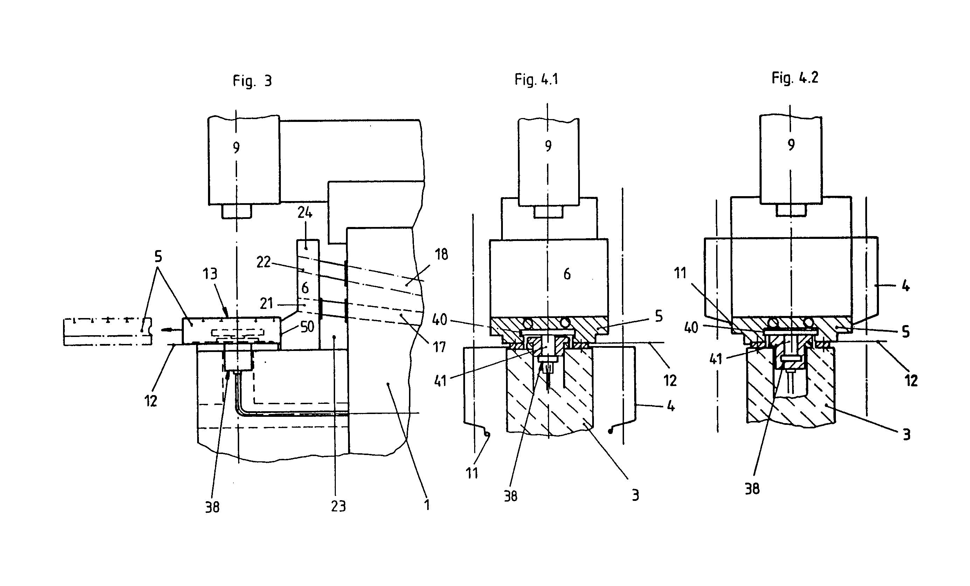

Fig. 3 ist ein Ausschnitt aus einer Seitenansicht eines Ausführungsbeispiels der erfindungsgemässen Funkenerosionsmaschine, die sich von der Funkenerosionsmaschine gemäss der älteren Anmeldung hauptsächlich durch ihre austauschbare Maschinentischplatte 5 unterscheidet und dementsprechend die Blähdichtung 50, sowie eine Schnellspannvorrichtung 38 aufweist. Letztere dient zur Befestigung der Maschinentischplatte 5 in der Bestimmungsebene 12 auf dem Maschinentisch 3. Zusätzlich sind dort zwei versetzt und vertikal angeordnete Zentrierdorne 39 für eine Zentrierung der Maschinentischplatte 5 (Fig. 2) vorgesehen. Die Zentriereinrichtung und die Schnellspannungvorrichtung 38 entsprechend im wesentlichen DIN 55 200.

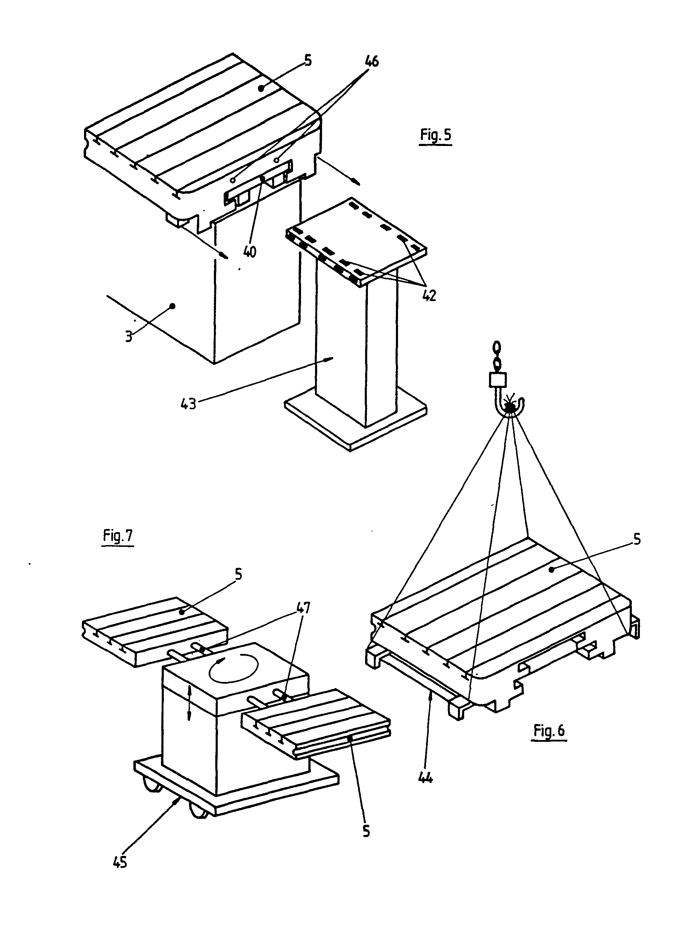

In den Fig. 4.1 und 4.2 ist ein Ausschnitt aus einem Ausführungsbeispiel in Vorderansicht dargestellt, einmal mit abgesenktem, beweglichem Bauteil 4 und gelöster Schnellspannvorrichtung 38 (Fig. 4.1), zum anderen mit hochgefahrenem beweglichen Bauteil 4 und angezogener Schnellspannvorrichtung 38 (Fig. 4.2). Die Schnellspannvorrichtung 38 besteht aus einem im wesentlichen T-förmigen und vertikal im Maschinentisch 3 geführten fluidisch betätigten Hubkolben 41. Dieser ist mit seinem horizontalen Schenkel im hinterschnittenen Teil einer Nut 40 horizontal geführt, wobei die Nut 40 ihrerseits an der Unterseite der Maschinentischplatte 5 mittig angeordnet ist und von vorne nach hinten verläuft.

Das eigentliche Auswechseln der Maschinentischplatte 5 kann erst dann erfolgen, wenn diese durch den T-förmigen Hubkolben 41 aus der Zentrierung gelöst und über die Zentrierdoren 39 hinweggehoben wurde. Erst danach kann die Palette bzw. Maschinentischplatte 5, wie aus Fig. 5 ersichtlich, von Hand oder mittels einer Hilfsvorrichtung nach vorne abgezogen und auf eine säulenähnlich, kopfseitig entsprechend ausgebildete und mit Rollen 42 versehene weitere Hilfsvorrichtung 43 aufgezogen werden. Von dort kann dann die Maschinentischplatte 5 unter Verwendung eines geeigneten Ladegeschirrs 44 an einem Kranhaken abgehoben und zu einer nicht dargestellten Aufrüststation überführt werden (Fig. 6).

Das Abziehen bzw. Abheben der Maschinentischplatte 5 unmittelbar vom Maschinentisch 3 ist auch mittels einer automatisch arbeitenden heb-, senk- und drehbaren Palettenwechselvorrichtung, nämlich einem Roboter 45, möglich. Hierzu sind in der Stirnseite der Maschinentischplatte 5 symmetrisch angeordnete Bohrungen 46 vorgesehen, welche die Tragholme 47 des Roboters 45 aufzunehmen vermögen (Fig. 7). Weitere Hilfs- und Transportmittel sind in diesem Fall nicht erforderlich.

**Patentansprüche**

1. Funkenerosionsmaschine mit
a) einem feststehenden Maschinentisch (3) und
b) einem darauf durch Zusammenfügen mindestens eines beweglichen Bauteils (4, 5) mit einem feststehenden Wandelement (6) anordbaren Arbeitsbehälter für die dielektrische Flüssigkeit, wobei
b.1) zumindest ein Teil des Arbeitsbehälterbodens von der Maschinentischplatte (5) und
b.2) die Rückwand des Arbeitsbehälters im wesentlichen aus dem feststehenden Wandelement (6) gebildet werden wobei
c) die Maschinentischplatte (5) betriebsmässig lösbar
c.1) unter Einschluss einer Dichtung (50) mit dem feststehenden Wandelement (6) und
c.2) mit dem Maschinentisch (3)
verbunden ist.

2. Funkenerosionsmaschine nach Anspruch (1) dadurch gekennzeichnet, dass das feststehende Wandelement (6) im Abstand (23) von der Stirnseite des Maschinenständers (1) angeordnet ist.

3. Funkenerosionsmaschine nach Anspruch (1) oder (2), dadurch gekennzeichnet, dass die Dichtung (50) eine Blähdichtung ist.

4. Funkenerosionsmaschine nach wenigstens einem der vorstehenden Ansprüche, dadurch gekennzeichnet, daß die Maschinentischplatte (5) auf ihrer Unterseite für einen Eingriff von im Maschinentisch (3) angeordneten Schnellspann- und Zentriervorrichtung (38, 39) ausgelegt ist.

5. Funkenerosionsmaschine nach Anspruch 4, dadurch gekennzeichnet, dass die Zentriereinrichtung (39) im wesentlichen zwei vertikal und versetzt auf dem Maschinentisch (3) angeordnete Zentrierdorne zur Fixierung der Maschinentischplatte (5) in der Bestimmungsebene (12) aufweist.

6. Funkenerosionsmaschine nach Anspruch 4 oder 5, dadurch gekennzeichnet, dass die Schnellspannvorrichtung (38) einen im wesentlichen T-förmigen, vertikal geführten Hubkolben (41) und die Maschinentischplatte (5) an ihrer Unterseite eine mittig angeordnete, von vorn nach hinten verlaufende hinterschnittene Nut (40) zur Aufnahe des horizontalen Schenkels des Hubkolbens (41) aufweist.

7. Funkenerosionsmaschine nach wenigstens einem der vorstehenden Ansprüche, dadurch gekennzeichnet, dass an der Stirnseite der Maschinentischplatte (5) symetrisch zur Mitte zwei Bohrungen (46) zur Aufnahme zweier Tragholme (47) einer automatisch arbeitenden, heb-, senk- und drehbaren Tischplattenwechselvorrichtung (Roboter 45) angeordnet sind.

8. Funkenerosionsmaschine nach wenigstens einem der vorstehenden Ansprüche, dadurch gekennzeichnet, dass die Maschinentischplatte (5) vorn und seitlich über den Maschinentisch (3) hinausragt.


## Revendications

1. Maschine d'électroérosion comprenant:
a) une table de travail fixe (3) et
b) un bac d'usinage, destiné à contenir un liquide diélectrique, pouvant être agencé sur la table de travail par l'assemblage d'au moins un composant mobile (4, 5) et d'un élément de paroi fixe, dans une disposition où
b.1) und partie au moins du fond du bac d'usinage est formée par le plateau (5) de la table de travail et
b.2) la paroi arrière du bac d'usinage est formée essentiellement par l'élément de paroi fixe (6), machine d'électroérosion dans laquelle
c) le plateau (5) de la table de travail est relié fonctionnellement, de façon amovible,
c.1) à l'élément de paroi fixe (6), avec interposition d'un joint d'étanchéité (50), et
c.2) à la table de travail (3) de la machine.

2. Machine d'électroérosion selon la revendication 1, caractérisée en ce que l'élément de paroi fixe (6) est disposé à distance (23) du côté frontal du montant (1) de la machine.

3. Machine d'électroérosion selon la revendication 1 ou 2, caractérisée en ce que le joint d'étanchéité (50) est un joint gonflable.

4. Machine d'électroérosion selon au moins une des revendications précédentes, caractérisée en ce que le dessous du plateau (5) est conçu pour coopérer avec des dispositifs (38, 39) de serrage rapide et de centrage, installés dans la table de travail (3).

5. Machine d'électroérosion selon la revendication 4, caractérisée en ce que le dispositif de centrage (39) présente essentiellement deux broches de centrage disposées verticalement et mutuellement décalées sur la table de travail (3) pour la fixation du plateau (5) dans le plan de référence (12).

6. Machine d'électroérosion selon la revendication 4 ou 5, caractérisée en ce que le dispositif de serrage rapide (38) présente un piston (41) essentiellement en forme de T, qui est guidé verticalement, et le plateau (5) présente une rainure et T (40), ménagée au milieu de son côté inférieur et s'étendant de l'avant vers l'arrière, pour la réception de la branche horizontale du piston (41).

7. Machine d'électroérosion selon au moins une des revendications précédentes, caractérisée en ce que deux perçages (46) sont pratiqués dans le côté frontal du plateau (5), symétriquement par rapport à son milieu, pour la réception de deux barres de support (47) d'un changeur automatique de plateaux (robot 45) qui est relevable, abaissable et rotatif.

8. Machine d'électroérosion selon au moins une des revendications précédentes, caractérisée en ce que le plateau (5) déborde de la table de travail (3) à l'avant et latéralement.


## Claims

1. A spark erosion machine with
a) stationary machine table (3) and
b) a working container for the dielectric fluid, able to be arranged on said table by joining together at least one mobile component part (4, 5) with a stationary wall element (6), wherein
b.1) at least one part of the working container base is formed on the machine table plate (5) and
b.2) the rear wall of the working container is formed substantially from the stationary wall element (6,
c) with the machine table plate (5), operationally releasable connected to
c.1) the stationary wall element (6), with inclusion of a seal (50), and
c.2) the machine table (3).

2. A spark erosion machine according to Claim (1), characterised in that the stationary wall element (6) is arranged at a distance (23) from the front face of the machine stand (1).

3. A spark erosion machine according to Claim (1) or (2) characterised in that the seal (50) is an expanding seal.

4. A spark erosion machine according to at least one of the preceding Claims, characterised in that the machine table plate (5) is laid out on its lower side for engagement by the quick-acting clamping device and centering devices (38, 39) arranged in the machine table (3).

5. A spark erosion machine according to Claim 4, characterised in that the centering device (39) has essentially two vertical centering mandrels arranged in an offset manner on the machine table (3) for fixing the machine table plate (5) at the predetermined level (12).

6. A spark erosion machine according to Claim 4 or 5, characterised in that the quick-acting clamping device (38) has a substantially T-shaped, vertically guided lifting cylinder (41) and the machine table plate (5), has on its under side a centrally arranged undercut groove (40) extending from the front to the back for accommodating the horizontal flank of the lifting cylinder (41).

7. A spark erosion machine according to at least one of the preceding Claims, characterised in that on the front face of the machine table plate (5) there are arranged, symmetrically to the centre, two bores (46) for accommodating two supporting bars (47) of an automatic lifting, lowering and rotating table plate changing device (robot 45).

8. A spark erosion machine according to at least one of the preceding Claims, characterised in that the machine table plate (5) juts out forwards and laterally above the machine table (3).

Fig. 1

Fig. 2

Fig. 4.2

Fig. 4.1

Fig. 3

EP 0 188 705 B1

Fig. 5

Fig. 7

Fig. 6

3